# EUROPÄISCHE PATENTSCHRIFT

(11) **EP 2 333 355 B1**
(45) Veröffentlichungstag und Bekanntmachung des Hinweises auf die Patenterteilung: **14.01.2015**
(21) Anmeldenummer: 10401182.0
(22) Anmeldetag: 05.11.2010
(51) Int. Cl.: F16B 13/00, E04B 1/74, H02B 1/40, H02G 3/12, E04B 1/76

(54) **Geräteträger**
Device carrier
Support d'appareillages

(30) Priorität: 02.12.2009 DE 102009056644; 20.09.2010 DE 102010004607
(43) Veröffentlichungstag der Anmeldung: 15.06.2011
(73) Patentinhaber: Kaiser GmbH & Co. KG, 58579 Schalksmuehle (DE)
(72) Erfinder: Kaiser, Burkard, 58509 Lüdenscheid (DE); Viola, Marc, 58339 Breckerfeld (DE); Langenohl, Benedikt, 58579 Schalksmühle (DE); Schütze, Andreas, 45659 Recklinghausen (DE); Walter, Rüdiger, 53125 Bonn (DE)
(74) Vertreter: Köchling, Conrad-Joachim

(56) Entgegenhaltungen:
- EP-A2- 0 710 751
- DE-A1-102006 049 952
- DE-C1- 10 228 255

## Beschreibung

Die Erfindung betrifft einen Geräteträger zur Befestigung in einer Ausnehmung oder Bohrung einer Wand, einer Hohlwand, einer wärmegedämmten Wandung oder einer wärmegedämmten Fassade, bei der zum Beispiel auf das Grundmauerwerk eine Dämmschicht und auf diese eine Putzschicht aufgebracht ist.

Im Stand der Technik ist es bekannt, an Gebäudewandungen, beispielsweise auch einer Hohlwand, einer mehrschichtigen Hohlwand oder einer wärmegedämmten Wandung oder Fassade von Gebäuden Geräteträger anzuordnen.

Aus der EP-A-0 710 751 ist ein Element zur Befestigung von Apparaten an einer Gebäudefassade bekannt.

Auch ist es bekannt, die Außenfassaden von Bauwerken mit einer Dämmschicht zu versehen. Hierbei wird auf das Grundmauerwerk eine Dämmschicht, beispielsweise in Form einer Hartschaumplatte aufgebracht. Diese wird beispielsweise mit einem Armierungsputz verputzt, auf den wiederum ein Glasfasergewebe aufgebracht wird, auf welches eine weitere Putzschicht aufgebracht wird, wobei schließlich eine die sichtbare Außenseite bildende Putzschicht aufgebracht wird.

Ein Problem hierbei besteht darin, dass an einer solchen Wandung oder dergleichen Geräte, wie beispielsweise ein Briefkasten, eine Leuchte, ein Hausnummernschild oder dergleichen Gegenstände nicht ohne weiteres befestigbar sind, weil eine dauerhafte Befestigung in einer solchen Wandung, Hohlwandung oder wärmegedämmten Wandung, zum Beispiel in der Dämmschicht oder auf der Dämmschicht nicht ohne weiteres möglich ist. Zudem soll bei einer solchen Anordnung die Bildung von einer Wärmebrücke zwischen dem Geräteträger und dem Grundmauerwerk weitgehend vermieden werden. Auch soll eine zugluftdichte Anordnung erreicht werden, wobei zudem bei Anordnung von mehreren Geräteträgern nebeneinander oder übereinander zur Befestigung eines Gegenstandes und eine Ausrichtung des am Geräteträger zu befestigenden Gegenstandes in einfacher Weise möglich sein soll.

Ausgehend von diesem Stand der Technik liegt der Erfindung die Aufgabe zugrunde, einen Geräteträger dieser Art zur Verfügung zu stellen, der einfach und dauerhaft in Wandungen, Hohlwandungen oder auch wärmegedämmten Wandungen, zum Beispiel in der Dämmschicht, befestigt werden kann, der die Bildung von Wärmebrücken zwischen dem Geräteträger und dem Grundmauerwerk weitgehend vermeidet, der eine Ausrichtung der entsprechenden zu befestigenden Teile am Geräteträger ermöglicht und der eine möglichst zugluftfreie Anordnung in der Ausnehmung, zum Beispiel der Wärmedämmschicht, erreicht.

Zur Lösung dieser Aufgabe wird vorgeschlagen, dass der Geräteträger aus einem zylindrischen, stirnseitig offenen Hohlkörper mit angeformten Spreizarmen besteht, der passend in die Ausnehmung oder Bohrung einschiebbar ist, sowie einem in den Hohlkörper von der Stirnseite her einschiebbaren im Wesentlichen zylindrischen Formkörper besteht, der in seiner Form und Abmessung dem Hohlraum des Hohlkörpers angepasst ist und in Montagesolllage den Hohlraum passend füllt, dass der Formkörper an seiner Stirnseite, die in Montagesolllage etwa bündig die Mündung des Hohlkörpers verschließt, eine Wandung mit einer Vielzahl von Lochungen aufweist, von denen alternativ eine zur Aufnahme des Schaftes eines Befestigungsmittels dient, und dass die Spreizarme des Hohlkörpers in einer Vormontagelage in den Hohlraum des Hohlkörpers verlagert sind und in der Umfangsfluchtlinie des Hohlkörpers liegen oder dahinter zurückliegen, sowie durch den eingeschobenen Formkörper aus der Vormontagelage in eine Montagesolllage verschwenkt sind, in der sie über die Umfangsfluchtlinie des Hohlkörpers vorragen.

Gemäß der Erfindung besteht der Geräteträger aus dem zylindrischen, stirnseitig offenen Hohlkörper mit angeformten Spreizarmen. Dieser Hohlkörper besteht vorzugsweise aus formstabilem Kunststoff. Zur Montage wird dieser Hohlkörper in die entsprechende Ausnehmung oder Bohrung der Wand, Hohlwand oder einer wärmegedämmten Fassade eingesetzt beziehungsweise eingeschoben. Um nun den Hohlkörper in dieser Position zu fixieren und einen sicheren Sitz in der Wandung oder Bohrung zu erreichen, wird von der Stirnseite her der im Wesentlichen zylindrische Formkörper eingeschoben. Dieser ist in seiner Form und Abmessung dem Hohlraum des Hohlkörpers angepasst, so dass er den Hohlraum des Hohlkörpers vorzugsweise passend ausfüllt.

In der Vormontagelage sind die Spreizarme des Hohlkörpers in den Hohlraum des Hohlkörpers hinein verlagert, also nach radial innen. Sie bilden damit beim Einschieben des Hohlkörpers in die entsprechende Bohrung oder Ausnehmung kein Hindernis. Erst durch das Einschieben des Formkörpers in den Hohlkörper werden diese Spreizarme aus der Vormontagelage in die Montagesolllage verschwenkt, da die im Inneren des Hohlraums des Hohlkörpers befindlichen Teile der Spreizarme durch den Formkörper nach radial außen gedrückt und somit in die Sollmontagelage verschwenkt werden, in der sie wesentlich über die Umfangsfluchtlinie des Hohlkörpers vorragen.

In dieser Position können sich die Spreizarme oder deren Bestandteile in die Lochleibung im Bereich der Ausnehmung oder Bohrung der Wand, Hohlwand oder dergleichen eindrücken und somit ein bleibendes Hindernis für mögliche Verschiebebewegungen des Hohlkörpers in der entsprechenden Bohrung oder Ausnehmung bilden. Der Hohlkörper ist damit ortsfest und lagesicher in der entsprechenden Wandung, Hohlwand, wärmegedämmten Wandung oder Fassade angeordnet. Zusätzlich weist der Formkörper an seiner Stirnseite eine Stirnwandung mit einer Vielzahl von Lochungen auf. Diese Stirnfläche liegt vorzugsweise bündig in der Mündung des Hohlkörpers also in der Montagesolllage in der Ebene der Außenfluchtlinie der entsprechenden Wandung. Zur Befestigung eines Gerätes kann beispielsweise eine gewindefurchende Schraube oder auch eine gewindeformende Schraube in eine der Lochungen eingeschraubt werden, um das entsprechende Gerät an dem Geräteträger zu fixieren. Die Vielzahl von Lochungen ermöglicht es, bei einer Übereinanderanordnung von mehreren solchen Geräteträgern eine exakte Ausrichtung zur Vertikalen zu erreichen, wenn ein entsprechender Gegenstand an dem Geräteträger montiert wird, da die Vielzahl von Lochungen die Möglichkeit bietet, eine exakte Vertikalausrichtung vorzunehmen. In gleicher Weise kann eine exakte Horizontalausrichtung vorgenommen werden, wenn beispielsweise zwei solcher Geräteträger mit Abstand nebeneinander angeordnet werden.

Um einen sicheren Sitz des Geräteträgers in der Lochlaibung zu erreichen ist zudem vorgesehen, dass die Spreizarme als sich über einen Teil der Länge des Hohlkörpers erstreckende, jeweils eine fensterartige Ausnehmung durchgreifende Haken ausgebildet sind, deren Hakenschaft am der Stirnseite des Hohlkörpers zugewandten Rand der Ausnehmung schwenkbeweglich angeformt ist und deren vom Hakenschaft quer abragende Spitze bezogen auf den Hohlkörper nach außen gerichtet ist.

Jeweils im Bereich einer solchen fensterartigen Ausnehmung ist ein Spreizarm angeordnet, wobei dieser mit dem freien Ende des Hakenschaftes beispielsweise über ein Filmscharnier an dem entsprechenden Rand der Ausnehmung schwenkbeweglich angeordnet ist. Am anderen Ende des Hakenschaftes ist die quer abragende Spitze vorgesehen, die bei Spreizung der Spreizarme in die Lochlaibung der Wandung oder dergleichen eindringt und für sicheren Sitz des Geräteträgers sorgt.

Bevorzugt ist dabei vorgesehen, dass mehrere Spreizarme auf den Umfang des Hohlkörpers verteilt angeordnet sind.

Hierdurch wird der sichere Sitz des Geräteträgers in der Lochung gefördert.

Des Weiteren kann zur Verbesserung des sicheren Sitzes vorgesehen sein, dass mehrere Spreizarme in axialer Richtung des Hohlkörpers verteilt angeordnet sind.

Es können also nicht nur mehrere Spreizarme in Umfangsrichtung gleichmäßig verteilt auf dem Hohlkörper angeordnet sein, sondern auch in axialer Richtung können mehrere solcher Spreizarme hintereinander angeordnet sein.

Um den Sitz der Spreizarme in der Lochlaibung noch zu verbessern, ist vorgesehen, dass zwischen Hakenschaft und Spitze eine dreieckige Versteifungswand angeformt ist, die mit einer langen Randkante am Hakenschaft und mit einer kurzen Randkante an der Spitze angeformt ist, wobei die freie Randkante eine Schneidkante bildet. Diese Schneidkante kann vorzugsweise auch mehrere Rastzähne aufweisen oder bilden.

Aus dem gleichen Grunde ist vorgesehen, dass die Spitze des Hakens ein Flächenelement mit Schneidkante ist, dessen Fläche sich quer zur Mittellängsachse des Hohlkörpers erstreckt.

Ein besonders sicherer Sitz wird erreicht, wenn jeweils ein Paar von Spreizarmen niveaugleich diametral gegenüberliegend mündungsnah und ein weiteres Paar von Spreizarmen niveaugleich diametral gegenüberliegend mündungsfern, vom ersten Paar axial beabstandet, angeordnet ist.

Um sicherzustellen, dass der Formkörper in der Montagesolllage bleibend im Hohlkörper angeordnet ist, also nicht ungewollt aus der Montagesolllage wieder in die Vormontagelage verschoben werden kann, ist vorgesehen, dass der Formkörper in der Montagesolllage im Hohlkörper mittels Rasten fixiert ist.

Aus dem gleichen Grunde ist bevorzugt vorgesehen, dass der Formkörper im Hohlkörper in Montagesolllage unverdrehbar und axial unverschiebbar gehalten ist.

Um das Einbringen des Hohlkörpers in die entsprechende Ausnehmung oder Bohrung zu erleichtern und/oder um das Einbringen des Formkörpers in den Hohlkörper zu erleichtern, kann vorgesehen sein, dass der Hohlkörper und/oder der Formkörper an seinem der Stirnseite abgewandten Ende konisch oder keilförmig verjüngt ist.

Um eine zugluftdichte Anordnung des Hohlkörpers in der entsprechenden Ausnehmung oder Bohrung zu erreichen, kann zudem vorgesehen sein, dass der Hohlkörper an seinem vorderen und/oder hinteren Endbereich eine umlaufende Dichtkante oder - lippe, vorzugsweise aus weichelastischem Werkstoff aufweist.

Die Dichtkante oder Dichtlippe kann beispielsweise aus einem elastomerem Werkstoff bestehen, wobei diese Schicht in einem ZweiKomponenten Spritz-Gießverfahren auf den Hohlkörper aufgebracht ist.

Um einen spaltfreien Sitz des Hohlkörpers in der entsprechenden Bohrung oder Ausnehmung insbesondere im Mündungsbereich des Hohlkörpers zu gewährleisten, ist vorgesehen, dass der Hohlkörper und/oder der Formkörper an seinem Mündungsende einen sich konisch erweiternden Kragen aufweist.

In der Einbausolllage stützt sich der Hohlkörper mit dem konisch erweiterten Kragen an der ihn umgebenden Schicht, zum Beispiel Putzschicht, dicht ab.

Ausführungsbeispiele der Erfindung sind in der Zeichnung dargestellt und im Folgenden näher beschrieben.

Es zeigt:
- Figur 1: eine erste Ausführungsform in Schrägansicht;
- Figur 2: desgleichen in der Montagesolllage in Draufsicht gesehen;
- Figur 3: eine Variante in einer Ansicht analog Figur 1 gesehen;
- Figur 4: die Variante in Seitenansicht;
- Figur 5: die Variante in Seitenansicht in einer gegenüber der Figur 4 um 90° um die Mittellängsachse gedrehten Position.
- Figur 6: den Einsatz eines erfindungsgemäßen Geräteträgers an einer einlagigen Hohlwand, beispielsweise in Form einer Gipskartonplatte;

- Figur 7: desgleichen in Seitenansicht;

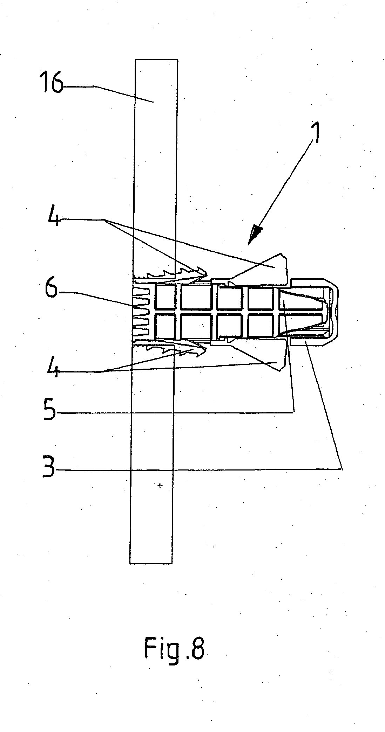

- Figur 8: desgleichen im Schnitt gesehen;
- Figur 9: eine Variante in gleicher Ansicht wie Figur 8 gesehen;
- Figur 10: die Anordnung eines Geräteträgers bei einer doppellagigen Hohlwandschicht, beispielsweise bestehend aus einer Gipskartonplatte mit rückseitiger Polyurethan-Schaumplatte;
- Figur 11: eine weitere Variante in Form einer 3-lagigen Hohlwand aus mehreren Schichten, beispielsweise aus Gipskartonplatten und Polyurethan-Dämmschichten.

In der Zeichnung ist ein Geräteträger 1 dargestellt, der dazu dient, dass an ihm bestimmte Gegenstände befestigt werden können. Um diese Gegenstände zum Beispiel an der Außenhaut einer wärmegedämmten Fassade anordnen zu können, weist die in üblicher Weise aufgebaute wärmegedämmte Fassade eine Ausnehmung oder eine Bohrung auf. Der Geräteträger 1 ist in diese Bohrung oder Ausnehmung in der Montagesolllage eingesetzt.

Der Geräteträger 1 besteht aus einem zylindrischen, stirnseitig bei 2 offenen Hohlkörper 3 mit angeformten Spreizarmen 4. Dieser Hohlkörper 3 ist in eine entsprechende Bohrung oder Lochung einer Wand oder dergleichen einschiebbar, wenn die Spreizarme sich in einer Position befinden, in der sie in das Innere des Hohlkörpers 3 verlagert sind, also über dessen Außenkontur nicht vorragen.

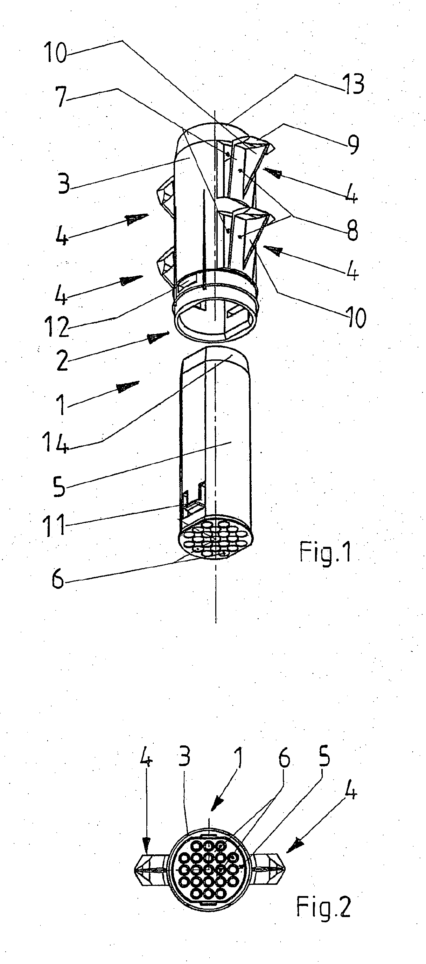

Des Weiteren besteht der Geräteträger 1 aus einem in den Hohlkörper 3 von der Stirnseite her einschiebbaren zylindrischen Formkörper 5. Diese ist in seiner Form und Abmessung dem Hohlraum des Hohlkörpers 3 angepasst, so dass er in der Einbausolllage, die beispielsweise in Figur 2 simuliert ist, passend im Hohlraum des Hohlkörpers 3 sitzt. Der Formkörper 5 besitzt an seiner Stirnseite, die in Montagesolllage etwa bündig die Mündung des Hohlkörpers 3 verschließt, eine Wandung mit einer Vielzahl von Lochungen 6. Zur Montage eines Gegenstandes kann dieser mit einer entsprechenden Montageplatte, die eine Lochung aufweist, vor der Stirnseite des Formkörpers 5 positioniert werden, so dass eine dessen Lochung durchgreifende Schraube in eine der Lochungen 6 eingreift und in diese eingeschraubt werden kann. Die Schraube kann beispielsweise eine gewindeschneidende oder gewindefurchende Schraube sein, so dass ein sicherer Sitz in der entsprechenden Bohrung 6 erreicht ist.

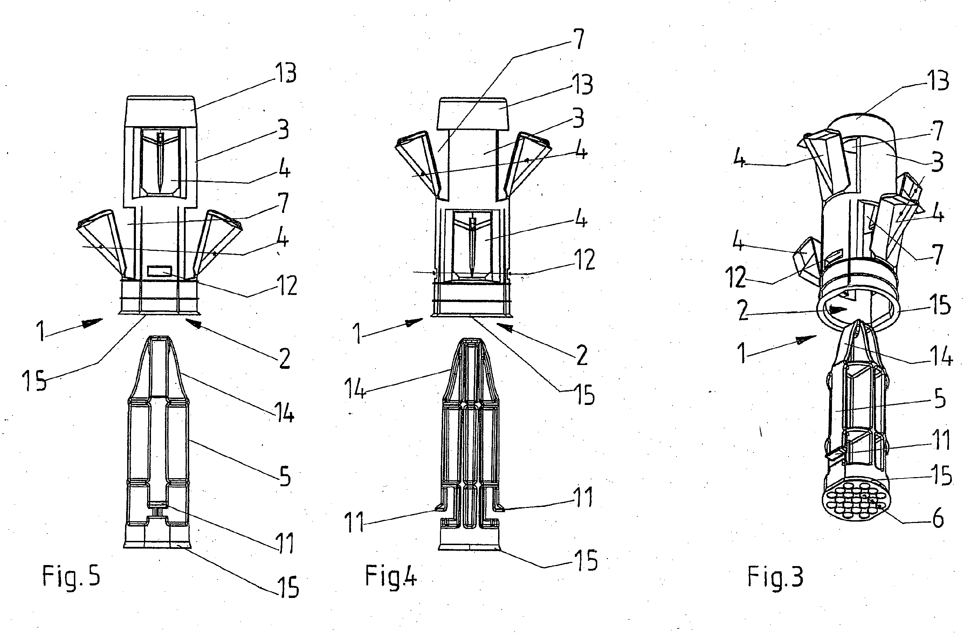

Die Spreizarme 4 des Hohlkörpers 3 sind in einer Vormontagelage, die in der Zeichnung nicht gezeigt ist, in den Hohlraum des Hohlkörpers 3 verlagert, so dass sie nicht über die Umfangsfluchtlinie des Hohlkörpers 3 vorragen, sondern in den Innenraum des Hohlkörpers 3 hineinragen. Wenn der Formkörper 5 in den Hohlraum des Hohlkörpers 3 vollständig eingeschoben ist, werden durch den Formkörper 5 die Spreizarme 4 nach radial außen verschwenkt, in eine Position, wie sie in den Zeichnungsfiguren angedeutet ist. Teilweise ist in den Zeichnungsfiguren die Spreizung übertrieben gezeigt. Der tatsächliche Spreizgrad ist etwas geringer, als beispielsweise in den Figuren 4 und 5 dargestellt ist. Jeder Spreizarm 4 ist als sich über einen Teil der Länge des Hohlkörpers 3 erstreckender, eine fensterartige Ausnehmung 7 des Hohlkörpers 3 durchgreifender Haken ausgebildet. Der Hakenschaft 8 ist am der Stirnseite des Hohlkörpers 3 zugewandten Rand der Ausnehmung 7 schwenkbeweglich, beispielsweise über ein Filmscharnier, angeformt. Die Spitze 9 des Hakens ragt quer vom Schaft 8 ab und ist bezogen auf den Hohlkörper 3 nach außen gerichtet. Bei der Ausführungsform nach Figur 1 und 2 sind jeweils zwei Spreizarme 4 parallel zur Mittelachse des Hohlkörpers 3 hintereinander angeordnet und zwar jeweils zwei auf gegenüberliegenden Seiten des Hohlkörpers 3. Bei der Ausführungsform nach Figur 3 bis 5 sind zwei Spreizarme 4 mündungsnah diametral gegenüberliegend angeordnet und zwei weitere Spreizarme um 90° versetzt nahe des Bodenteils des Hohlkörpers 3 angeordnet.

Zwischen dem Hakenschaft 8 und der Hakenspitze 9 ist eine dreieckige Versteifungswand 10 angeformt, die mit einer langen Randkante am Hakenschaft 8 mit einer kurzen Randkante an der Spitze 9 angeformt ist. Die freie Randkante der Versteifungswand 10 bildet eine Schneidkante, die beim Spreizen der Spreizarme mit in das umgebende Material eindringt und für sicheren Halt sorgt. Zusätzlich ist zur Verbesserung des sicheren Sitzes die Spitze 9 des Hakens das Flächenelement mit Schneidkante ausgebildet, wobei sich dessen Fläche etwa quer zur Mittellängsachse des Hohlkörpers 3 erstreckt. Hierdurch wird ein sicherer Sitz des Geräteträgers 1 in der Lochung erreicht.

Vorzugsweise ist der Formkörper 5 in der Montagesolllage im Hohlkörper 3 mittels Rasten 11 fixiert, wobei diese Rasten 11 in Rastausnehmungen 12 des Hohlkörpers 3 eingreifen. Auch in anderer Weise ist die Fixierung des Formkörpers 5 im Hohlkörper 3 zu erreichen. Es soll in jedem Falle sichergestellt sein, dass die Teile zueinander unverdrehbar und axial unverschiebbar gehalten sind, wenn die Montagesolllage eingestellt ist.

Vorzugsweise weist der Hohlkörper 3 und auch der Formkörper 5 jeweils an seinem der Stirnseite abgewandten Ende eine konische oder keilförmige Verjüngung 13 beziehungsweise 14 auf.

Darüber hinaus kann der Hohlkörper 3 an seinem in Einschubrichtung vorderen oder auch in seinem in Einschubrichtung hinteren Endbereich eine umlaufende Dichtkante oder Dichtlippe aus elastomeren Werkstoff aufweisen. Zudem weist im Ausführungsbeispiel der Hohlkörper 3 und auch der Formkörper 5 an seinem Mündungsende einen sich konisch erweiternden Kragen 15 auf, wobei die letztgenannten Maßnahmen dazu dienen, einen dichten Sitz in der entsprechenden Lochung oder Ausnehmung zu erreichen und zudem ein optisch ansprechendes Bild und einen Anschlag in der Einbausollposition zu erreichen.

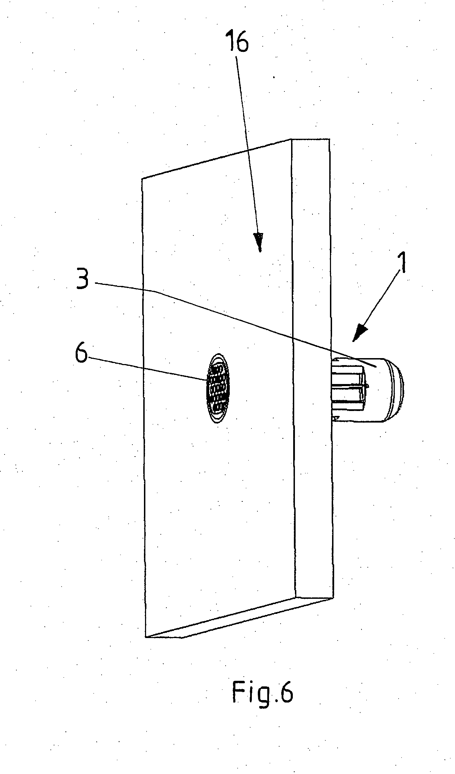

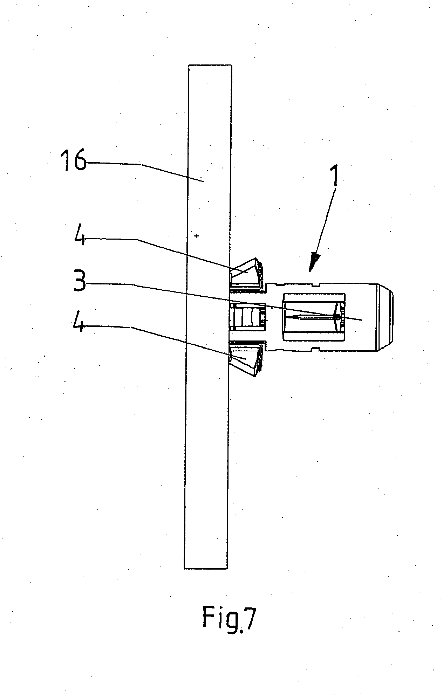

In Figur 6 ist verdeutlicht, dass der komplette Geräteträger 1 in einer einlagigen hohlwandbildenden Platte 16 installiert ist. In Figur 7 ist gezeigt, dass die Spreizarme in der Montagesolllage durch den Formkörper 5 ausgespreizt sind, so dass sie mit ihrer Randkante teils im Bereich der Lochleibung in das Material der Platte 16 eingreifen, teils hinter dieser verspreizt liegen.

Vorzugsweise kann dabei der Hohlkörper 3 an seinem Vorderende, welches zur Aufnahme des Formkörpers 5 offen ist, einen Flanschrand oder dergleichen aufweisen, der sich an der Vorderseite der entsprechenden Wandung 16 abstützt.

In der Figur 7 ist die Einbausolllage gezeigt, wobei mehrere Spreizarme 4 in Längsrichtung des Hohlkörpers 3 vorgesehen sind. Die der Mündung am nächsten liegenden Spreizarme 4 sind mit widerhakenartigen Vorsprüngen versehen, die an einer Schneidkante der Spreizarme 4 ausgebildet sind, um eine gute Verbindung mit dem Material der Platte 16 im Bereich der Lochleibung zu erreichen.

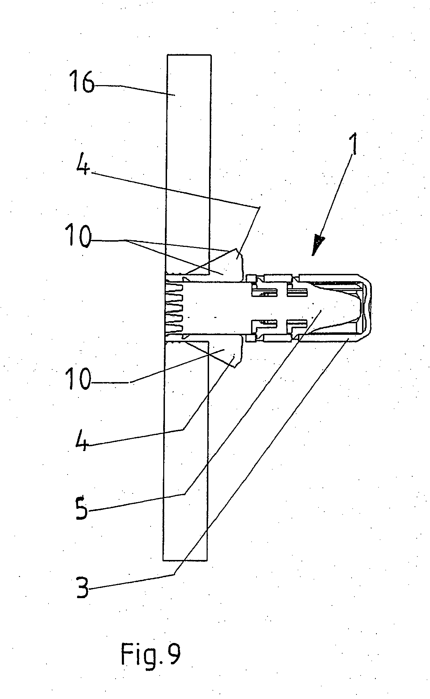

Bei der Ausführungsform gemäß Figur 9 weisen die Spreizarme 4 eine zur Arretierung dienende Randkante 17 am Rand der dreieckigen Versteifungswand 10 auf, wobei dies wiederum zum sicheren Sitz des Geräteträgers 1 in der Lochung der Wandung 16 dient.

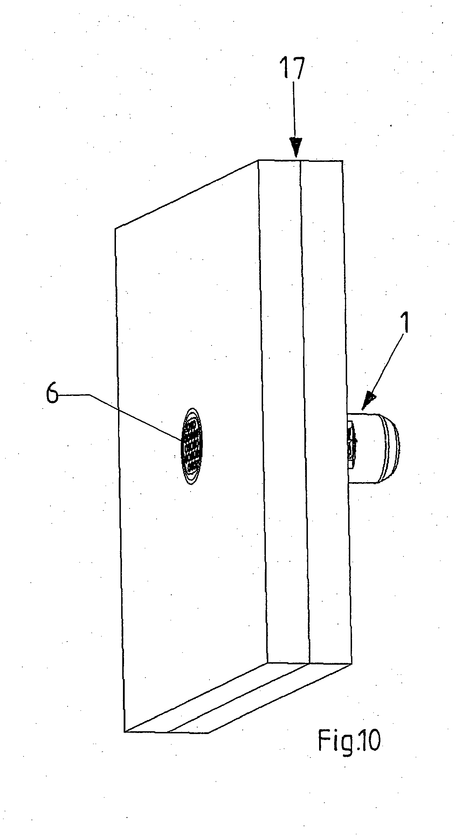

In der Figur 10 ist eine alternative Wandung 17 gezeigt, die aus zwei Lagen besteht. Diese beiden Lagen können beispielsweise zwei Gipskartonplatten sein. Sie können aber auch aus einer Kombination einer Gipskartonplatte mit einer Dämmplatte oder aus anderen Materialkombinationen bestehen.

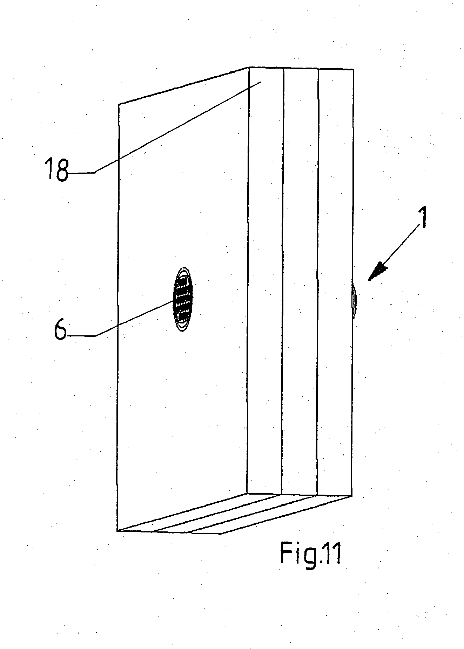

In ähnlicher Weise ist in Figur 11 eine dreilagige Platte 18 gezeigt, die eine Lochung zur Aufnahme des Geräteträgers 1 aufweist. Auch hierbei können die mehreren Schichten der Platte 18 beispielsweise aus gleichem Material, insbesondere Gipskartonplatten bestehen oder aus Materialkombinationen, beispielsweise Gipskartonplatten und Dämmplatten.

Auch bei unterschiedlich dicken Platten 16, 17, 18 wird ein sicherer Sitz des Geräteträgers 1 durch die erfindungsgemäße Ausbildung erreicht.

Der Geräteträger 1, also der Hohlkörper 3 und der Formkörper 5, bestehen vorzugsweise aus geeigneten Kunststoffen.

Mit der erfindungsgemäßen Ausbildung des Geräteträgers 1 wird erreicht, dass eine weitgehend wärmebrückenfreie Installation eines Geräteträgers zum Beispiel in einer Dämmschicht möglich ist, wobei eine Winddichtheit in diesem Bereich erreicht wird. Die entsprechende Einbaubohrung oder Ausnehmung durchgreift im Regelfall die gesamte wärmedämmende Schicht bis zum Grundmauerwerk. Es wird durch die entsprechenden Dichtkanten oder Dichtlippen sowie durch den konischen Kragen diesbezüglich eine weitgehend winddichte Anordnung erreicht. Ein Toleranzausgleich zum Ausrichten der an dem Geräteträger zu befestigenden Geräte ist möglich, weil die Vielzahl von Lochungen 6 eine exakte Ausrichtung in vertikaler oder horizontaler Richtung ermöglicht, wenn mehrere solcher Geräteträger nebeneinander oder übereinander angeordnet sind, die nicht ganz exakt vertikal oder horizontal zueinander in die Lochung der Wandung eingebracht sind. Beim Einbau des entsprechenden Geräteträgers in die entsprechende Ausnehmung oder Lochung zum Beispiel einer Fassade werden sichtbare Beschädigungen der Fassade vermieden. Die Erfindung stellt einen einfach aufgebauten und äußerst funktionstüchtigen Geräteträger zur Verfügung, der zum Einbau in wärmegedämmte Fassaden vorzüglich geeignet ist.

Die Erfindung ist nicht auf das Ausführungsbeispiel beschränkt, sondern im Rahmen der Offenbarung und der Ansprüche vielfach variabel.

Alle neuen, in der Beschreibung und/oder Zeichnung offenbarten Einzel- und Kombinationsmerkmale werden im Rahmen der Ansprüche als erfindungswesentlich angesehen.

## Patentansprüche

1. Geräteträger (1) zur Befestigung in einer Ausnehmung oder Bohrung einer Wand, einer Hohlwand oder einer wärmegedämmten Wandung oder Fassade von Gebäuden, **dadurch gekennzeichnet, dass** der Geräteträger (1) aus einem zylindrischen, stirnseitig offenen Hohlkörper (3) mit angeformten Spreizarmen (4) besteht, der passend in die Ausnehmung oder Bohrung einschiebbar ist, sowie einem in den Hohlkörper (3) von der Stirnseite her einschiebbaren im Wesentlichen zylindrischen Formkörper (5) besteht, der in seiner Form und Abmessung dem Hohlraum des Hohlkörpers (3) angepasst ist und in Montagesolllage den Hohlraum passend füllt, dass der Formkörper (5) an seiner Stirnseite, die in Montagesolllage etwa bündig die Mündung des Hohlkörpers (3) verschließt, eine Wandung mit einer Vielzahl von Lochungen (6) aufweist, von denen alternativ eine zur Aufnahme des Schaftes eines Befestigungsmittels dient, und dass die Spreizarme (4) des Hohlkörpers (3) in einer Vormontagelage in den Hohlraum des Hohlkörpers (3) verlagert sind und in der Umfangsfluchtlinie des Hohlkörpers (3) liegen oder dahinter zurückliegen, sowie durch den eingeschobenen Formkörper (5) aus der Vormontagelage in eine Montagesolllage verschwenkt sind, in der sie über die Umfangsfluchtlinie des Hohlkörpers (3) vorragen.

2. Geräteträger nach Anspruch 1, **dadurch gekennzeichnet, dass** die Spreizarme (4) als
sich über einen Teil der Länge des Hohlkörpers (3) erstreckende, jeweils eine fensterartige Ausnehmung (7) durchgreifende Haken ausgebildet sind, deren Hakenschaft (8) am der Stirnseite des Hohlkörpers (3) zugewandten Rand der Ausnehmung (7) schwenkbeweglich angeformt ist und deren vom Hakenschaft (8) quer abragende Spitze (9) bezogen auf den Hohlkörper (3) nach außen gerichtet ist.

3. Geräteträger nach einem der Ansprüche 1 oder 2, **dadurch gekennzeichnet, dass** mehrere Spreizarme (4) auf den Umfang des Hohlkörpers (3) verteilt angeordnet sind.

4. Geräteträger nach einem der Ansprüche 1 bis 3, **dadurch gekennzeichnet, dass** mehrere Spreizarme (4) in axialer Richtung des Hohlkörpers (3) verteilt angeordnet sind.

5. Geräteträger nach einem der Ansprüche 2 bis 4, **dadurch gekennzeichnet, dass** zwischen Hakenschaft (8) und Spitze (9) eine dreieckige Versteifungswand (10) angeformt ist, die mit einer langen Randkante am Hakenschaft (8) und mit einer kurzen Randkante an der Spitze (9) angeformt ist, wobei die freie Randkante eine Schneidkante bildet.

6. Geräteträger nach einem der Ansprüche 2 bis 5, **dadurch gekennzeichnet, dass** die Spitze (9) des Hakens ein Flächenelement mit Schneidkante ist, dessen Fläche sich quer zur Mittellängsachse des Hohlkörpers (3) erstreckt.

7. Geräteträger nach einem der Ansprüche 1 bis 6, **dadurch gekennzeichnet, dass** jeweils ein Paar von Spreizarmen (4) niveaugleich diametral gegenüberliegend mündungsnah und ein weiteres Paar von Spreizarmen (4) niveaugleich diametral gegenüberliegend mündungsfern, vom ersten Paar axial beabstandet, angeordnet ist.

8. Geräteträger nach einem der Ansprüche 1 bis 7, **dadurch gekennzeichnet, dass** der Formkörper (5) in der Montagesolllage im Hohlkörper (3) mittels Rasten (11) fixiert ist.

9. Geräteträger nach einem der Ansprüche 1 bis 8, **dadurch gekennzeichnet, dass** der Formkörper (5) im Hohlkörper (3) in Montagesolllage unverdrehbar und axial unverschiebbar gehalten ist.

10. Geräteträger nach einem der Ansprüche 1 bis 9, **dadurch gekennzeichnet, dass** der Hohlkörper (3) und/oder der Formkörper (5) an seinem der Stirnseite abgewandten Ende konisch oder keilförmig verjüngt ist.

11. Geräteträger nach einem der Ansprüche 1 bis 10, **dadurch gekennzeichnet, dass** der Hohlkörper (3) an seinem vorderen und/oder hinteren Endbereich eine umlaufende Dichtkante oder -lippe, vorzugsweise aus weichelastischem Werkstoff aufweist.

12. Geräteträger nach einem der Ansprüche 1 bis 11, **dadurch gekennzeichnet, dass** der Hohlkörper (3) und/oder der Formkörper (5) an seinem Mündungsende einen sich konisch erweiternden Kragen (15) aufweist.

## Claims

1. A device carrier (1) for fixing in a recess or a borehole of a wall, a cavity wall, or a thermally insulated wall or façade of buildings, **characterized by** that the device carrier (1) consists of a cylindrical, front opening hollow body (3) with integrated spreading arms (4), which hollow body (3) can be fitted into the recess or borehole, and of a substantially cylindrical shaped body (5) to be slid from the front into the hollow body (3), said shaped body (5) being matched in its shape and dimensions to the cavity of the hollow body (3) and in the desired mounting position fittingly filling the cavity, that the shaped body (5) has at its front that in the desired mounting position approximately flushly closes off the orifice of the hollow body (3), a wall with a multitude of perforations (6), alternatively one of which serves for receiving the shaft of a fastening means, and that in a pre-assembly position the spreading arms (4) of the hollow body (3) are displaced into the cavity of the hollow body (3) and are located in the line of peripheral alignment of the hollow body (3) or behind thereof, and are pivoted by the slid-in shaped body (5) from the pre-assembly position into a desired mounting position, in which they protrude beyond the line of peripheral alignment of the hollow body (3).

2. The device carrier according to claim 1, **characterized by** that the spreading arms (4) are configured as hooks extending over a part of the length of the hollow body (3) and respectively passing through window-like recesses (7), the hook shafts (8) thereof being pivotally formed at the edge of the recess (7) facing the front of the hollow body (3) and the tip (9) thereof extending transversely from the hook shaft (8) is outwardly directed relative to the hollow body (3).

3. The device carrier according to one of claims 1 or 2, **characterized by** that a plurality of spreading arms (4) are distributed over the periphery of the hollow body (3).

4. The device carrier according to one of claims 1 to 3, **characterized by** that a plurality of spreading arms (4) are distributed in an axial direction of the hollow body (3).

5. The device carrier according to one of claims 2 to 4, **characterized by** that between hook shaft (8) and tip (9), a triangular stiffening wall (10) is formed that is formed with a long border edge at the hook shaft (8) and with a short border edge at the tip (9), the free border edge forming a cutting edge.

6. The device carrier according to one of claims 2 to 5, **characterized by** that the tip (9) of the hook is a flat element with a cutting edge, the surface of which extends transversely to the central longitudinal axis of the hollow body (3).

7. The device carrier according to one of claims 1 to 6, **characterized by** that one pair of spreading arms (4) are respectively disposed at the same level in a diametrically opposed relationship close to the orifice and another pair of spreading arms (4) are respectively disposed at the same level in a diametrically opposed relationship far from the orifice, axially spaced to the first pair.

8. The device carrier according to one of claims 1 to 7, **characterized by** that in the desired mounting position the shaped body (5) is fixed in the hollow body (3) by means of catches (11).

9. The device carrier according to one of claims 1 to 8, **characterized by** that the shaped body (5) is held in the hollow body (3) in the desired mounting position in a non-rotatable and axially non-displaceable manner.

10. The device carrier according to one of claims 1 to 9, **characterized by** that the hollow body (3) and/or the shaped body (5) is conically tapered or wedge-shaped at its end opposed to the front side.

11. The device carrier according to one of claims 1 to 10, **characterized by** that the hollow body (3) comprises at its front and/or rear end region a circumferential sealing edge or lip, preferably made of a compliant material.

12. The device carrier according to one of claims 1 to 11, **characterized by** that the hollow body (3) and/or the shaped body (5) comprises at the end of its orifice a conically widening collar (15).

## Revendications

1. Support d'appareillages (1) pour la fixation dans un évidement ou un alésage d'un mur, d'un mur creux, ou d'un mur ou d'une façade de bâtiments isolée thermiquement, **caractérisé en ce que** le support d'appareillages (1) consiste en un corps creux (3) cylindrique ouvert sur le côté face frontale avec des bras d'expansion (4) intégrés, ce corps creux (3) pouvant être introduit de façon ajustée dans l'évidement ou l'alésage, et en un corps façonné (5) essentiellement cylindrique pouvant être introduit à partir du côté face frontale dans le corps creux (3), ce corps façonné (5) étant ajusté en forme et dimensions à la cavité du corps creux (3) et dans la position de consigne de montage remplissant de manière ajustée la cavité, que le corps façonné (5) a à son côté face frontale qui dans la position de consigne de montage ferme l'orifice du corps creux (3) en formant une surface environ plane, un mur avec plusieurs perforations (6), alternativement une desquelles sert de logement de la tige d'un moyen de fixation, et que dans une position de pré-assemblage les bras d'expansion (4) du corps creux (3) sont déplacés dans la cavité du corps creux (3) et se trouvent sur la ligne d'alignement périphérique du corps creux (3) ou derrière celle-ci, et sont pivotés par le corps façonné (5) inséré à partir de la position de pré-assemblage dans une position de consigne de montage, dans laquelle ils font saillie au-delà de la ligne d'alignement périphérique du corps creux (3).

2. Support d'appareillages selon la revendication 1, **caractérisé en ce que** les bras d'expansion (4) sont réalisés en forme de crochets s'étendant sur une partie de la longueur du corps creux (3) et respectivement passant à travers des évidements (7) de type fenêtre, les tiges (8) des crochets étant formées à pivotement au bord de l'évidement (7) tourné vers le côté face frontale du corps creux (3) et la pointe (9) s'étendant transversalement à partir de la tige (8) du crochet étant dirigée vers l'extérieur par rapport au corps creux (3).

3. Support d'appareillages selon une des revendications 1 ou 2, **caractérisé en ce que** plusieurs bras d'expansion (4) sont distribués sur la périphérie du corps creux (3).

4. Support d'appareillages selon une des revendications 1 à 3, **caractérisé en ce que** plusieurs bras d'expansion (4) sont distribués dans une direction axiale du corps creux (3).

5. Support d'appareillages selon une des revendications 2 à 4, **caractérisé en ce qu'**entre la tige (8) et la pointe (9) du crochet, une paroi raidisseuse (10) triangulaire est formée, qui est formée avec une arête de bord longue à la tige (8) du crochet et avec une arête de bord courte à la pointe (9), l'arête de bord libre formant un tranchant de couteau.

6. Support d'appareillages selon une des revendications 2 à 5, **caractérisé en ce que** la pointe (9) du crochet est un élément plan avec un tranchant de couteau, la surface duquel s'étend transversalement à l'axe longitudinal central du corps creux (3).

7. Support d'appareillages selon une des revendications 1 à 6, **caractérisé en ce qu'**une pair de bras d'expansion (4) est respectivement disposée au même niveau selon un rapport diamétralement opposé près de l'orifice et une autre paire de bras d'expansion (4) est respectivement disposée au même niveau selon un rapport diamétralement opposé loin de l'orifice, axialement à distance de la première paire.

8. Support d'appareillages selon une des revendications 1 à 7, **caractérisé en ce que** le corps façonné (5) est fixé dans la position de consigne de montage dans le corps creux (3) au moyen de crans d'arrêt (11).

9. Support d'appareillages selon une des revendications 1 à 8, **caractérisé en ce que** le corps façonné (5) est maintenu dans le corps creux (3) dans la position de consigne de montage d'une manière non rotative et non déplaçable axialement.

10. Support d'appareillages selon une des revendications 1 à 9, **caractérisé en ce que** le corps creux (3) et/ou le corps façonné (5) est constitué de façon conique ou en forme de coin à son extrémité opposée au côté face frontale.

11. Support d'appareillages selon une des revendications 1 à 10, **caractérisé en ce que** le corps creux (3) comprend à sa région d'extrémité frontale et/ou arrière une arête ou lèvre d'étanchéité circonférentielle, de préférence en une matière flexible.

12. Support d'appareillages selon une des revendications 1 à 11, **caractérisé en ce que** le corps creux (3) et/ou le corps façonné (5) comprend à l'extrémité de son orifice un collier (15) s'élargissant en forme de cône.
